# EUROPEAN PATENT APPLICATION

(11) **EP 1 696 393 A2**
(43) Date of publication of application: **30.08.2006**
(21) Application number: 06004028.4
(22) Date of filing: 28.02.2006
(51) Int. Cl.: G07C 9/00

(54) **Face authenticating apparatus and entrance and exit management apparatus**

(30) Priority: 28.02.2005 JP 2005053385
(71) Applicant: KABUSHIKI KAISHA TOSHIBA, Tokyo 105-8001 (JP)
(72) Inventor: Takizawa, Kei, Minato-ku Tokyo 105-8001 (JP)
(74) Representative: HOFFMANN EITLE

(57) **Abstract**

A pedestrian moves in a direction indicated by the arrow "a", and a face of a pedestrian M facing a door (3) provided in an entrance and exit target area (2) is captured by cameras. Specifically, while the pedestrian M exists between a position C and a position A in the walking area (1), an image including at least a face of the pedestrian M is captured as an image by the cameras (11 and 12). While the pedestrian M reaches the door (3) from the position A, it is determined whether or not the pedestrian M is a person who has been registered in advance, based on the captured image. In the case where the determination result is affirmative, the door (3) is opened.

## Description

The present invention relates to a face authenticating apparatus for correlating dictionary information having characteristic information on a pedestrian's face image registered in advance, and then, determining whether or not the pedestrian is a person who has been registered in advance; and an entrance and exit management apparatus for managing entrance and exit with respect to a room, a facility or the like which requires security by using the face authenticating apparatus.

The entrance and exit management apparatus using the face authenticating apparatus has a camera for picking up a person targeted for authentication as an image. When a person stops in front of the camera and turns his or her face to the camera's lens, a face image of the person is picked up via the camera. Then, the entrance and exit management apparatus correlates characteristic information on a face specific to the person obtained from the face information picked up as an image with dictionary information which has been registered in advance, and then, determines whether or not the person is a person which has been registered in advance. Further, in the case where the person is a person which has been registered in advance as a result of this determination, the entrance and exit management apparatus opens a door of an entrance and exit target area (such as a room or a facility) (refer to Jpn. Pat. Appln. KOKAI Publication No. 2001-266152, for example).

However, the entrance and exit management apparatus picks up a face image of a person targeted for authentication in a state in which the person stops in front of the camera. Therefore, there is a problem that it is inconvenient for such a person targeted for authentication to do this. Namely, it is necessary for the person targeted for authentication to wait until an authenticating process terminates while he or she stops in front of the camera. That is, in an entrance and exit management apparatus of this type, a face image of a person who is walking cannot be picked up as an image in the case where an authenticating target is a pedestrian (a moving person). Thus, this apparatus is unsuitable as an entrance and exit management apparatus in a room or facility which a comparatively large number of people frequently come in and go out.

In contrast, in the case where a pedestrian (a moving person) is targeted for authentication, a contrivance is made for reliably picking up a face image of a pedestrian in comparison with a case of picking up a person who stops in front of equipment. Namely, it is desirable to pick up a frontal face image (hereinafter, referred to as a frontal image) such that characteristics of the pedestrian's face can be well identified. As a publicly known example whose object is to pick up a frontal image of a pedestrian, for example, there is known a method disclosed in Jpn. Pat. Appln. KOKAI Publication Nos. 2000-331207 and 2002-140699.

In Jpn. Pat. Appln. KOKAI Publication No. 2000-331207, the pedestrian's face is picked up as an image downwardly while attention is paid to the fact that a person is likely to face down when he or she is walking. Specifically, a camera angle is adjusted slightly upwardly from a position which is lower than the left and right side of the face in corridor so as to easily pick up a frontal face of the pedestrian who is walking with his or her face down.

However, in the image pickup method disclosed in this publication, it is easy to grasp characteristics of a face of a pedestrian who is walking with his or her face down, but a face image picked up downwardly is produced with respect to a pedestrian who is walking with his or her face being straight front, and there is a high possibility that a frontal image cannot be picked up.

In Jpn. Pat. Appln. KOKAI Publication No. 2002-140699, the invention is featured in that a camera is allocated at a position at which a pedestrian's face can be picked up as an image at a moment at which a door is opened while attention is paid to the fact that, when the pedestrian passes through the door, he or she is likely to face straight front.

However, in the image pickup method disclosed in this publication, an image of a moment at which the door is opened is picked up as an image, and thus, a frontal image can be picked up just momentarily. For this reason, a very small number of images can be picked up. The frontal image includes a number of important characteristics in identifying persons. Thus, in the case where the small number of almost frontal face images can be picked up, the precision of authentication is lowered.

Further, what is common to the above-described two publications is that it is impossible to identify which pedestrian's face is picked up as an image by equipment. That is, the image pickup methods disclosed in the two publications are image pickup methods in which a pedestrian is not caused to be recognizant of a camera.

In the case where it is presumed that face authentication is carried out, it is better for a pedestrian to know that his or her face is picked up as an image, and is in authentication because the state of equipment can be grasped. Namely, when it is identified that face authentication is in progress, there is a high possibility that the pedestrian is recognizant of facing the camera.

However, in the above-described image pickup method disclosed in the two publications, the pedestrian is not caused to be recognizant of the camera, so that there is a low possibility that the pedestrian oneself faces the camera. Thus, a frontally oriented face cannot be well picked up as an image, and authentication is likely to fail. In the case where authentication has failed, it is difficult for a pedestrian to identify whether he or she has been unsuccessfully authenticated or whether a person who is walking in front has been unsuccessfully authenticated. Namely, in this case, the pedestrian is unaware of knowing what to do next while he or she is inhibited to pass through street.

It is an object of the present invention to provide a face identification apparatus and an entrance and exit management apparatus capable of enhancing a success rate of face identification with respect to a moving person.

In order to achieve the above object, a face authenticating apparatus according to an aspect of the present invention is a face authenticating apparatus for, until a moving person reaches a specific position, authenticating a face of the person, the apparatus comprising: a camera which picks up an image including at least a face of the moving person; a face detector section which detects a face region of the person from the image picked up by the camera; a face authenticating section which correlates an image on the face region detected by the face detector section with dictionary information which has been registered in advance, thereby determining whether or not the person is a person which has been registered in advance; and a face authentication display section provided in the vicinity of the specific position, the display section displaying a current state of face authentication with respect to the moving person, wherein the camera is provided at a position at which the face of the person moving to the specific position is picked up as an image from a substantially frontal face while viewing the face authentication display section.

Further, a face authenticating apparatus according to another aspect of the present invention is a face authenticating apparatus for, until a moving person reaches a specific position, authenticating a face of the person, the apparatus comprising: a camera which picks up an image including at least a face of the moving person; a face detector section which detects a face region of the person from the image picked up by the camera; a face authenticating section which correlates an image on the face region detected by the face detector section with dictionary information which has been registered in advance, thereby determining whether or not the person is a person which has been registered in advance; a face authentication display section provided in the vicinity of the specific position, the display section displaying a current state of face authentication with respect to the moving person; and a face distance measuring section which calculates a distance of the moving person from the specific position, wherein the camera is provided at a position at which the face of the person moving to the specific position is picked up as an image from a substantially frontal face while the person is viewing the face authentication display section, and the face authentication display section changes a display image based on a result of the measurement in the face distance measuring section.

Moreover, an entrance and exit management apparatus according to still another aspect of the present invention is an apparatus for, until a moving person reaches an entrance and exit gate provided in an entrance and exit target area, authenticating a face of the person, and controlling the entrance and exit gate to be opened or closed based on a result of the authentication, the management apparatus comprising: a camera which picks up an image including at least a face of the moving person; a face detector section which detects a face region of the person from the image picked up by the camera; a face authenticating section which correlates an image on the face region detected by the face detector section with dictionary information which has been registered in advance, thereby determining whether or not the person is a person which has been registered in advance; a face authentication display section provided in the vicinity of the specific position, the display section displaying a current state of face authentication with respect to the moving person; and gate control means for controlling the entrance and exit gate to be opened or closed based on a result of the determination in the face authenticating section, wherein the camera is arranged at a position at which the face of the person moving to the entrance and exit gate is picked up as an image from a substantially frontal face while viewing the face authentication display section.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic view of an entrance and exit management apparatus using a face identification apparatus according to an embodiment of the present invention;
FIG. 2 is a schematic view showing a modified example of the entrance and exit management apparatus shown in FIG. 1;
FIG. 3 is a block diagram depicting a control system of the entrance and exit management apparatus shown in FIG. 1;
FIG. 4 is a view adopted to explain a configuration of a face identification display section;
FIGS. 5A to 5F are views each showing a display screen example in the face identification display module;
FIG. 6 is a view showing an illumination display module allocated at the periphery of the face identification display module;
FIG. 7 is a schematic view adopted to explain a relationship of allocating the face authentication display section and a camera;
FIGS. 8A and 8B are views each adopted to explain an example of detecting a face region;
FIG. 9 is a view adopted to explain correlation of a result of the detection of the face region;
FIG. 10 is a flow chart adopted to explain a flow of a processing operation of a gate control module;
FIG. 11 is a flow chart adopted to explain a flow of a processing operation of a display identification control module;
FIG. 12 is a flow chart adopted to explain a flow of a processing operation of the display identification control module; and
FIG. 13 is a flow chart adopted to explain a flow of a processing operation of registering dictionary information.

Hereinafter, embodiments of the present invention will be described with reference to the accompanying drawings.

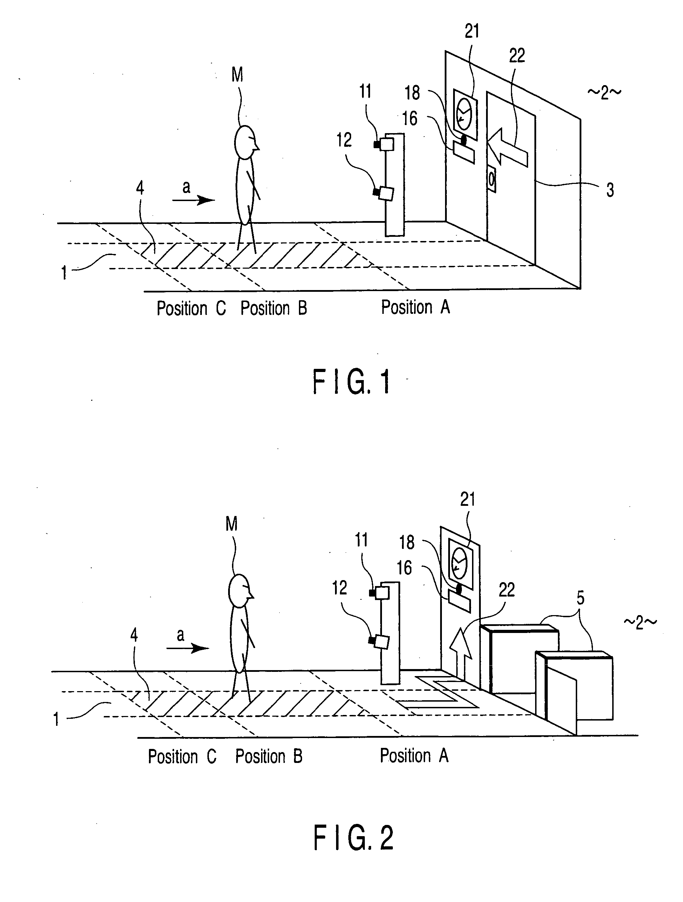

For example, as shown in FIG. 1, an entrance and exit management apparatus, to which a face identification apparatus according to an embodiment of the present invention is applied, picks up as an image by cameras 11 and 12 a face of a pedestrian M who faces a door 3 (entrance and exit gate) provided in an entrance and exit target area (such as a room or a facility) 2 while moving a walking area 1 in a direction indicated by the arrow "a", and then, determines whether the door 3 can be opened or not based on the captured face image.

Specifically, the entrance and exit management apparatus captures an image including at least a face of the pedestrian M by the cameras 11 and 12 while the pedestrian M is passing from point C to point A of the walking area 1, and determines whether or not the door 3 can be opened based on the picked-up face image while the pedestrian M reaches from the point A to the door 3. At this time, the entrance and exist management apparatus extracts characteristic information on a face of the person from the face image picked up by the cameras 11 and 12, and correlates the extracted characteristic information with dictionary information which has been registered in advance, thereby determining whether or not the pedestrian M is a person who has been registered in advance. Then, in the case where the determination result is affirmative, the entrance and exit management apparatus opens the door 3 of the entrance and exit target area 2.

Hereinafter, the region from the position C to the position A indicated by the shaded line in FIG. 1 is referred to as an image pickup area 4. FIG. 2 illustrates an example of an entrance and exit management apparatus using the door 3 as a gateway unit 5. The entrance and exit management apparatus shown in FIG. 2 has the same structure as that shown in FIG. 1 expect that the door 3 is used as the gateway unit 5. Now, the entrance and exit management apparatus shown in FIG. 1 will be typically described here.

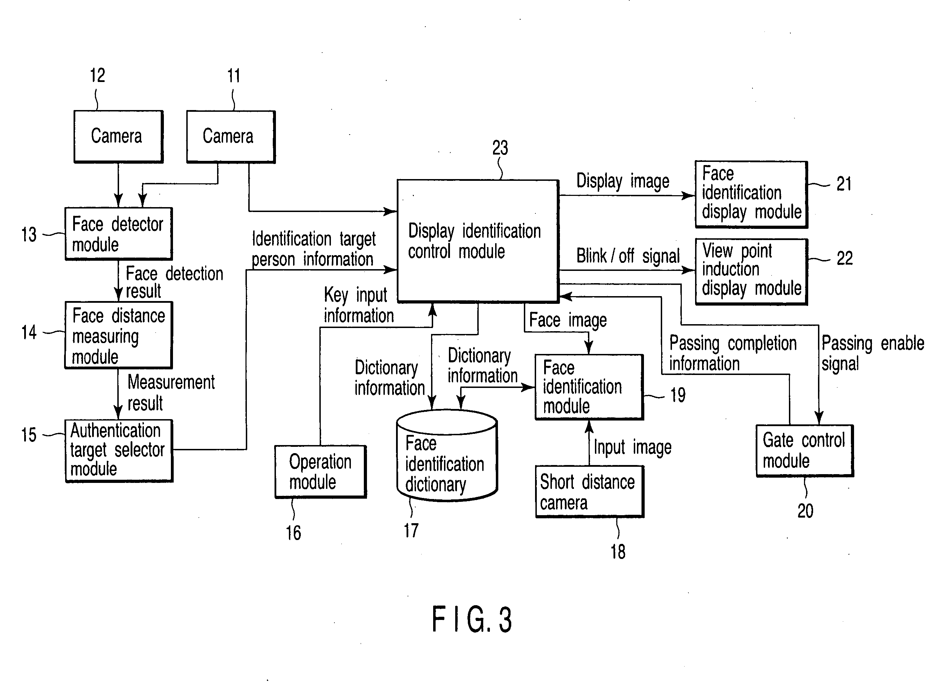

FIG. 3 is a block diagram depicting a configuration of the above-described entrance and exit management apparatus. The entrance and exit management apparatus has first and second video cameras 11 and 12 (hereinafter, simply referred to as cameras 11 and 12), a face detector module 13, a face distance measuring module 14, an identification target selector module 15, an operating module 16, a face authenticating dictionary 17, a short distance camera 18, a face authenticating module 19, a gate control module 20, a face identification display module 21, a viewing line induction display module 22, and a display identification control module 23.

The cameras 11 and 12 each capture an image which includes at least the face of a pedestrian M. The face detector module 13 detects a face region of the pedestrian M from each of the images picked up by the cameras 11 and 12. The face distance measuring module 14 calculates a distance between the pedestrian M and each of the cameras 11 and 12. The identification target selector module 15 selects an optimal face region targeted for identification. The operating module 16 makes an input operation such as a dictionary registering operation by the pedestrian oneself. The face authenticating dictionary 17 registers (stores) plural items of dictionary information in advance as characteristic information on a face specific to each person based on a face image of a person who is permitted to enter or exit from the entrance and exit target area 2. The short distance camera 18 picks up an image which includes at least a face of the pedestrian M in a short distance. The face authenticating module 19 correlates characteristic information on an image of a face region picked up by the cameras 11 and 12 and selected by the identification target selector module 15 or characteristic information on a face image picked up by the short distance camera 18 with dictionary information which has been registered in advance in the face authenticating dictionary 17, thereby determining whether or not the pedestrian M is a person who has been registered in advance. The gate control module 20 controls opening of the door 3 (or gateway unit 5) based on a result of determination of the face authenticating module 19. The face identification display module 21 displays a current status of face identification with respect to the pedestrian M. The view point induction display module 22 displays an arrow for prompting the pedestrian M to view the face identification display module 21, and invokes the pedestrian to pay attention. The display identification control module 23 controls a whole operation of the above-described entrance and exit management apparatus.

Hereinafter, a more detailed description will be given with respect to constituent elements of the above entrance and exit management apparatus.

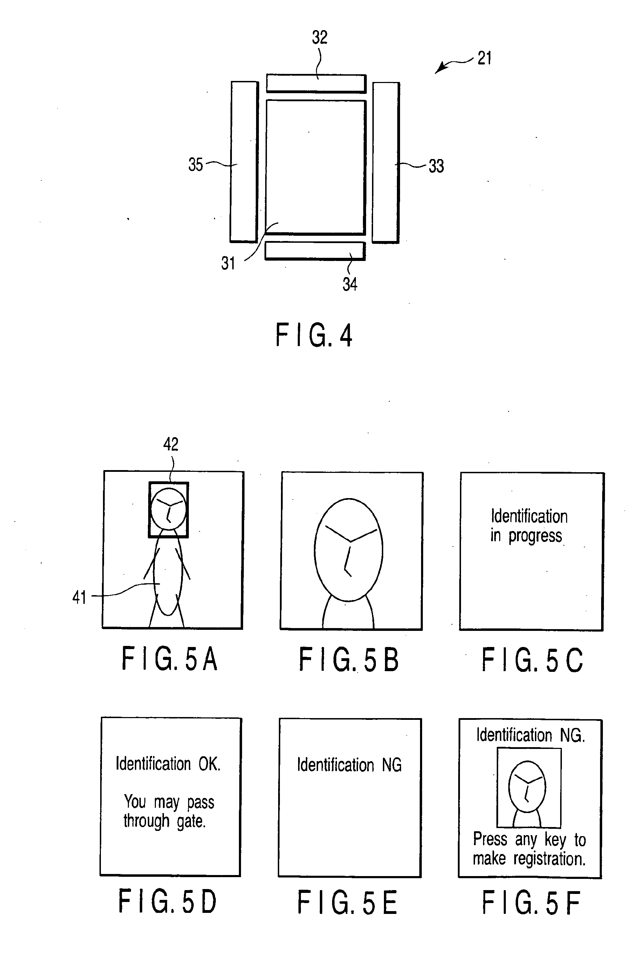

The face identification display module 21, for example, as shown in FIG. 1 (FIG. 2), is installed in proximity to the door 3 (or gateway unit 5). For example, as shown in FIG. 4, the display module has a plurality of illumination lamps (for example, fluorescent lamps) 32, 33, 34, and 35 arranged at a liquid crystal display 31 and at the peripheral edge of the display. The illumination lamps 32, 33, 34, and 35 each are turned off in general, and is turned on only in the case where the pedestrian M carries out dictionary registration immediately in front of the face identification display module 21. The installation height of the face identification display module 21 is set to an extent equivalent to an average value of a height of the pedestrian M.

The face identification display module 21 displays a current state of face identification with respect to the pedestrian M. Specifically, in the case where the pedestrian M is distant from the door 3, and his or her face cannot be detected, or alternatively, in the case where the detection just starts, a whole image 41 picked up via the camera 11 installed at the height of the face of the pedestrian M in FIG. 1 is displayed as shown in FIG. 5A. A frame 42 located on a screen shown in FIG. 5A indicates a region of a face detected by the face detector module 13.

In the case where the face is detected, and then, the pedestrian M approaches from the door 3 up a predetermined distance, more specifically, in the case where the pedestrian M approaches the camera 11 more significantly than the position B shown in FIG. 1, the face identification display module 21 displays the detected face image in an enlarged manner, as shown in FIG. 5B.

Further, in the case where the pedestrian M approaches the door 3, more specifically, in the case where the pedestrian M approaches the door 3 more significantly than the position A in FIG. 1, the face authenticating module 19 picks up an image via the camera 11, refers to the face authenticating dictionary 17 based on the face image detected by the face detector module 13, and starts determination as to whether or not the pedestrian is a person who has been registered in advance.

At this time, the face identification display module 21 displays a message indicating that "identification is in progress", as shown in FIG. 5C. In this manner, the pedestrian can judge that his or her face image has been successfully picked up.

In the case where, after identification has terminated, the face authenticating module 19 determines that the pedestrian is a person who has been registered in advance, the face identification display module 21 displays a message indicating that entrance has been permitted for the pedestrian M, as shown in FIG. 5D.

In the case where the identification fails, i.e., in the case where the face authenticating module 19 determines that the pedestrian is not a person who has been registered in advance, the face identification display module 21 displays a message indicating that entrance has been rejected for the pedestrian M, as shown in FIG. 5E. The display shown in FIG. 5E will be described in detail in a description of the display identification control module 23 given later.

The viewing line induction display module 22 is provided as a message display for prompting the pedestrian M to view the face identification display module 21, and, for example, is formed of an arrow pattern using a plurality of light emitting elements such as LEDs. This arrow pattern, a tip end of which is oriented to a direction of the face identification display module 21, is allocated in front of the pedestrian M. For example, in the case of FIG. 1, the arrow pattern is provided at the door 3, and in the case of FIG. 2, the arrow pattern is provided from the walking area 1 toward a wall face on which the face identification display module 21 is installed.

In the case where the pedestrian M is spaced from the door 3 by a predetermined distance, more specifically, in the case where the pedestrian M exists between the position B and the position C shown in FIG. 1, the viewing line induction display module 22 is operated to blink, and is induced for the pedestrian M to view the face identification display module 21. In the case where the pedestrian M further approaches the door 3, more specifically, in the case where the pedestrian M exists between the position B and the position A in FIG. 1, a blinking operation of the view point induction display module 22 is stopped and turned off. The reason is as follows. When the pedestrian M is distant from the door 3 to a certain extent, the view point induction display module 22 is required to prompt the pedestrian to orient his or her face to the face identification display module 21. However, after the pedestrian has noticed the display module, the pedestrian watches the blinking if the view point induction display module 22 blinks, and there is a possibility that a frontal face image cannot be obtained.

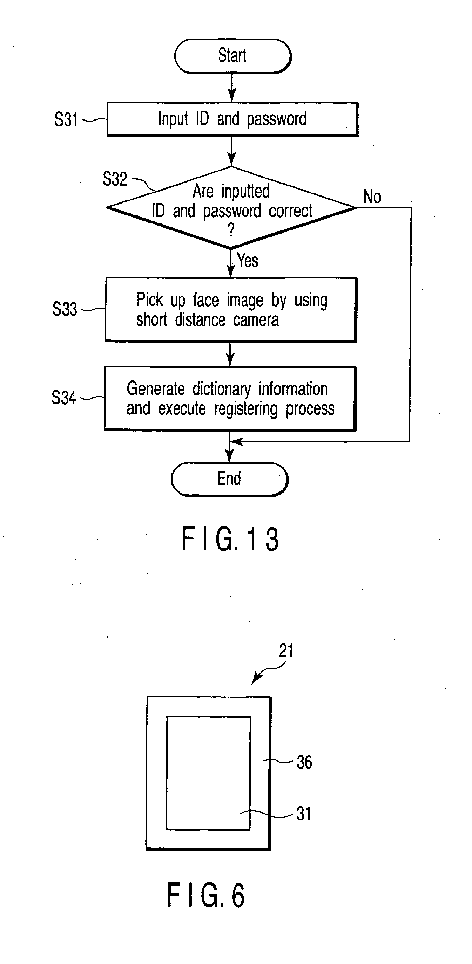

As another example of the view point induction display module 22, for example, as shown in FIG. 6, there may be employed an illumination display module 36 formed in a rectangular frame shape, the display module being allocated at the periphery of the liquid crystal display module 31. Although this illumination display module 36, for example, may be formed while a number of LEDs are arranged as in the above-described arrow pattern, a display may be provided such that a comparatively colorful pattern moves.

In any case, the illumination display module 36 is also operated in the case where the pedestrian M is spaced from the door 3 by a predetermined distance as in the above-described arrow pattern, more specifically, in the case where the pedestrian M exists between the position B and the position C shown in FIG. 1. This operation is stopped in the case where the pedestrian M further approaches the door 3, more specifically, in the case where the pedestrian M exists between the position B and the position A shown in FIG. 1.

In addition, the illumination display module 36 (or view point induction display module 22) may be operated in a standby state in which no pedestrian exists in the walking area 1 of the entrance and exit management apparatus. In this case, a mobile image capable of catching the pedestrian's attention or the like may be displayed as a standby screen via the liquid crystal display module 31 as well as the illumination display module 36 (or view point induction display module 22).

The operating module 16 is, for example, installed at a downward site of the face identification display module 21, as shown in FIG. 1. The operating module 16 is used when the pedestrian M makes an authenticating operation while stopping in front of the face identification display module 21 or when the pedestrian enters an ID number, a password or the like by a dictionary registering operation, and includes a keyboard or a pointing device (mouse). The operating module 16 also includes a wireless communication medium possessed by a pedestrian, for example, a reader/writer for making wireless communication with a wireless ID card or a portable cellular phone.

The short distance camera 18 is installed between the face identification display module 21 and the operating module 16 as shown in FIG. 1, for example, and picks up a face image of a person (pedestrian M) who exists in front of the face identification display module 21. Like the operating module 16, the short distance camera 18 is used in the case where the pedestrian M makes operation while stopping in front of the face identification display module 21.

An example of the pedestrian M making operation while stopping in front of the face identification display module 21 includes a case in which the pedestrian M fails in face identification for the pedestrian to approach the door 3, and then, restarts face identification in detail while stopping in front of the face identification display module 21. Alternatively, this example can include a case in which a pedestrian M having an ID number or a password for entering and exiting from the entrance and exit target area 2, the pedestrian M failing to register his or her own face image with respect to the entrance and exit management apparatus, registers characteristic information on a face image picked up by the short distance camera 18 in the entrance and exit management apparatus (face identification dictionary 17).

The cameras 11 and 12 are installed so as to have a common field of view, and capture a face image of the pedestrian M who moves the walking area 1 toward the door 3. The camera 11 installed at the height of the face of the pedestrian M picks up a frontal face image in the case where the pedestrian M views the face identification display module 21. The camera 12 installed at a position lower than the face of the pedestrian M picks up a frontal face image in the case where the pedestrian M walks with his or her face down without viewing the face identification display module 21. Further, the two cameras 11 and 12 are used for the purpose of measuring a relative position of the pedestrian M from a camera by stereo vision.

The cameras 11 and 12 are, for example, arranged in parallel in a vertical direction between the position A and the door 3 (face identification display module 21) at a position slightly displaced from the walking area 1, as shown in FIG. 1. The installation height of the upper camera 11 is set at the substantially equal height to the face identification display module 21. However, these cameras are set to be slightly lower than the face identification display module 21 such that the face identification display module 21 is not hidden by the camera 11.

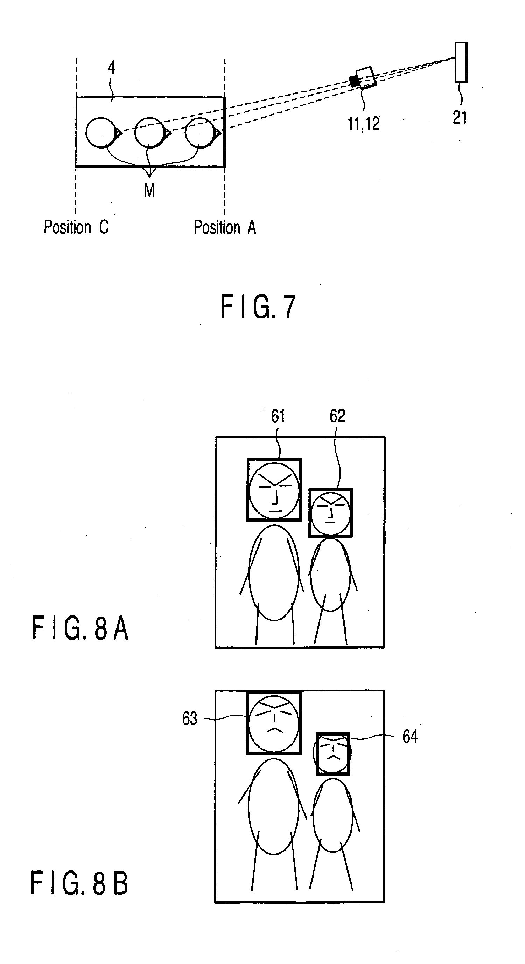

In the case where this camera installation is viewed upwardly, the camera 11 (12) is positioned, as shown in FIG. 7, in a location in which the camera overlaps on the face identification display module 21 viewed from the pedestrian M in the image pickup target area 4. That is, the camera 11 (12) and the face identification display module 21 are positioned in location in which the camera 11 (12) and face identification display module 21 are arranged in a substantially straight line. In addition, the installation height of the lower camera 21 is at a position which is lightly lower than the upper camera 11. That is, the camera 12 is installed so as to look up the pedestrian M from a slightly lower position.

By the arrow pattern of the view point induction display module 22 or the illumination display module 36 and by an identification image displayed to be changed via the face identification display module 21, a pedestrian moving the walking area 1 toward the door 3 is prompted to pay attention to view the face identification display module 21, and thus, orients his or her line of sight to the camera 11 installed between the above display module and the face identification display module 21. In other words, the installation position of the camera 11 is set at a position such that, when the pedestrian M moving the walking area 1 orients his or her line of sight to the face identification display module 21, a frontal image of the pedestrian M can be picked up.

Thus, the camera 11 may not be always installed between the pedestrian M and the face identification display module 21, and for example, the pedestrian M may be captured as an image while the short distance camera 18 installed adjacent to the face identification display module 21 is caused to have a telescopic function. Alternatively, a reflection mirror such as a half mirror is installed between the pedestrian M and the face identification display module 21 so as to install the camera 11 on its optical path.

The face detector module 13 detects a region in which a respective face exists with respect to each of the images picked up by the cameras 11 and 12. For a processing operation of detecting a face region, for example, there is used a technique described in document (Mita, Kaneko, Hori, "A proposal for spatial differential probability template suitable to correlation of images including very small difference", Transaction of ninth image sensing symposium, SSII03, 2003). This technique is to produce a detection dictionary pattern from a face learning pattern in advance, and then, making a search for a pattern having likelihood which is as high as a dictionary pattern from among an input image.

FIGS. 8A and 8B each show a specific example of detecting a face region. FIG. 8A shows an image picked up by the upper camera 11; and FIG. 8B shows an image picked up by the lower camera 12, wherein the face regions detected by the face detector module 13 are displayed by frames 61, 62, 63, and 64.

The face distance measuring module 14 obtains a viewing difference by correlating the face regions detected from the images picked up by the cameras 11 and 12, and calculate a distance from the cameras 11 and 12 up to the face of the pedestrian M. A correlation in face region is obtained by, for example, a well known template pattern matching technique.

The upper camera 11 and the lower camera 12 are arranged in a substantially vertical direction. Thus, the corresponding face region can be found by searching for the image picked up by the camera 12 with respect to the face region detected by the image picked up by the camera 11. Specifically, while the face region detected from the image of the camera 11 is used as a template, the image from the camera 12 is searched in a vertical direction, and a face region, where the likelihood becomes maximal, is detected as corresponding to the template.

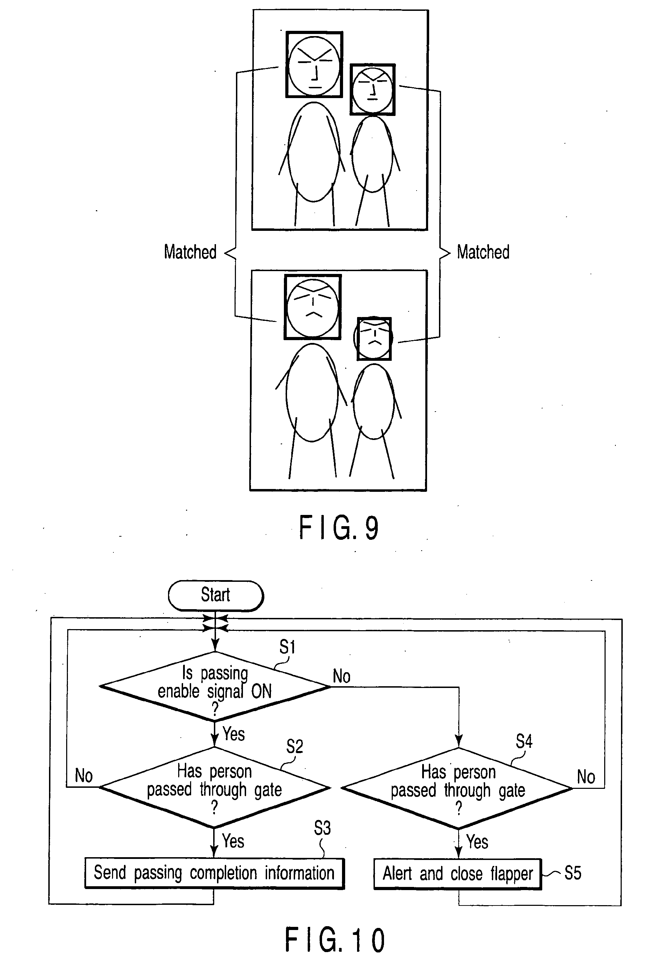

FIG. 9 shows a relationship of associating a result of face region detection. A region close to a frontal face is selected from among a pair of face regions associated with each other at the same time. Specifically, a higher likelihood with a detection dictionary pattern computed by the face detector module 13 is selected. The selected face region is used for carrying out identification by the face authenticating module 19. The upper portion of FIG. 9 shows an image picked up by the camera 11, and the lower portion of FIG. 9 shows an image picked up by the camera 12. These figures correspond to FIGS. 8A and 8B, respectively.

A positional relationship between the camera 11 or 12 and the face of the pedestrian M can be computed from a relationship of associating the face regions with each other and a positional relationship between the cameras 11 and 12. This computation is carried out in accordance with a method disclosed in document ("Three-dimensional vision", Kyoritsu Printing Co., Ltd., Tsuyoshi JYO et al, Chapter 7) or the like. Specifically, a direction of a face relevant to the camera 11 is calculated from a position of a face on an image of the camera 11, and a distance from the camera 11 is calculated from the difference between the two face positions captured from cameras 11 and 12. Therefore, a three-dimensional position of the face of the pedestrian M around the position of the camera 1 can be calculated.

The face distance measuring module 14 outputs a set of face regions whose correlation is obtained, and a three-dimensional position of the face of the pedestrian M around the position of the door 3. The position of the face of the pedestrian M from the door 3 is obtained based on a positional relationship of the face of the pedestrian M from the camera 11 after a positional relationship between the camera 11 and the door 3 has been obtained in advance.

The identification target selector module 15 acquires a face region (face image) and three-dimensional positional face information which are outputs from the face distance measuring module 14, and determines a face region targeted for face identification. In the case where a face region is a person who exists in the image pickup area 4, the face region is targeted for identification. In the case where a plurality of persons exist in the image pickup region 4, a face region of a person who is closer to the door 3 is preferentially targeted for identification.

In the case where a three-dimensional position of the face region selected as an identification target has drastically changed from a previous frame, it is determined that a person targeted for identification has been changed, and then, an identification face number is incremented. The identification face number used here indicates a sequential number of a person targeted for identification. The initial value is "0", and is incremented in the case where a new person is targeted for identification. The display identification control module 23 which carries out processing operation upon the receipt of an output from the identification target selector module 15 recognizes that a person targeted for identification has been changed due to a change of the identification face number.

The face authenticating module 19 determines whether or not an image in a face region from the identification target selector module 15 (or face image picked up by the short distance camera 18) has been registered in advance. Specifically, as described in, for example, Jpn. Pat. Appln. KOKAI Publication No. 2001-266152, a face image of a registrant (pedestrian) is prepared in advance, and specific characteristic information extracted from such a face image is stored (registered) as dictionary information in the face recognition dictionary 17. Then, the image (characteristic information) in the face region selected by the identification target selector module 15 is correlated with dictionary information registered in advance in the face recognition dictionary 17, and the likelihood between them is obtained. In the case where the obtained likelihood is equal to or greater than a preset threshold value, it is determined that the pedestrian M is a person who has been registered in advance. In the case where the obtained likelihood is not equal to or greater than the threshold value, it is determined that the pedestrian M is not a person which has been registered in advance.

The gate control module 20 opens the door 3 when a passing enable signal from the display identification control module 23 is turned on in the case where a control target is the door 3, as shown in FIG. 1. In addition, the gate control module 20 operates in accordance with a flowchart shown in FIG. 10 in the case where a control target is the gateway unit 5, as shown in FIG. 2.

Namely, when the passing enable signal from the display identification control module 23 is turned ON (step 1: YES), after a person has been passed through the gateway unit 5 (step 2: YES), the gate control module 20 transmits passing completion information to the display identification control module 23 (step 3). On the other hand, in the case where a person has passed through the gateway unit 5 although the passing enable signal is turned off (step 1; NO and step 2: YES), the gate display module 20 sounds warning, closes a flapper provided at the gateway unit 5 (step 3), and inhibits passing of the person.

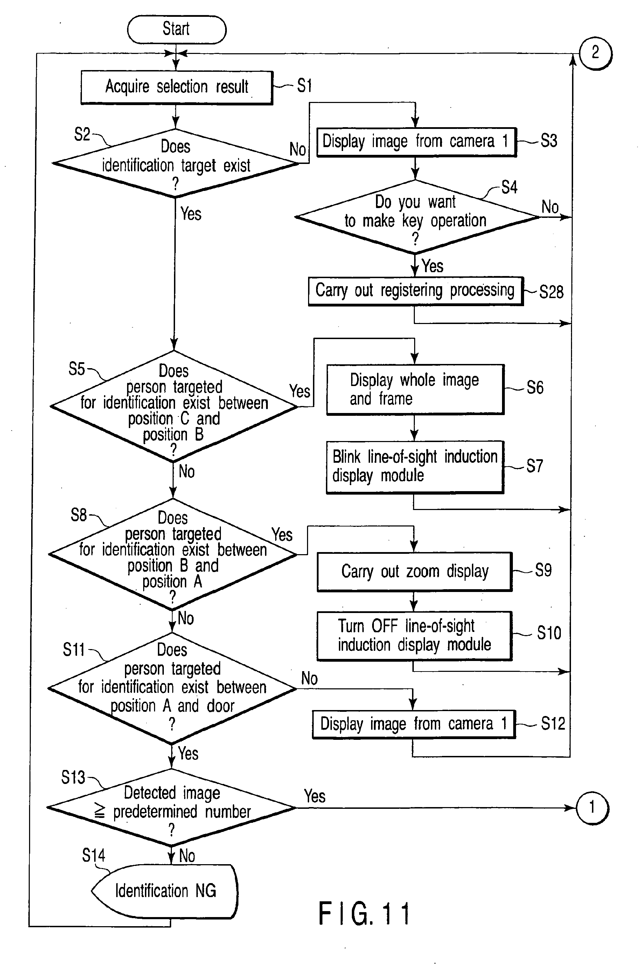

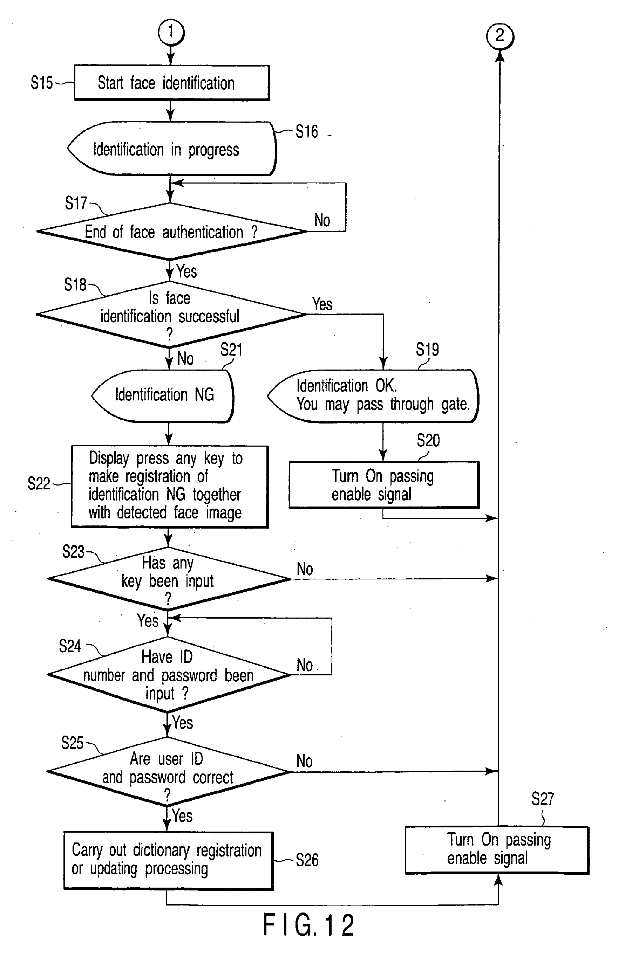

The display identification control module 23 controls a whole operation of the entrance and exit management apparatus. A flow of the processing operation is shown in flowcharts of FIGS. 11 and 12. Now, a processing operation by the display identification control module 23 will be described with reference to the flowcharts of FIGS. 11 and 12.

First, the display identification control module 23 (hereinafter, simply referred to as control module 23) acquires a selection result of the identification target selector module 15 (FIG. 11 and step 1), and checks whether or not a person targeted for identification exists in the image pickup area 4 (step 2). In the case where, as a result of the check in step 2, it is determined that nobody exists in the image pickup area 4 (step 2: NO), the control module 23 displays an image picked up by the camera 11, i.e., an image indicating that nobody exists via the face identification module 21 (step 3).

At the same time, the control module 23 checks whether or not any key operation has been made by the operating module 16 (step 4). In the case where, as a result of the check in step 4, the control module 23 determines that no key operation is made (step 4; NO), the current processing reverts to step 1.

Before the above-described processing operation in step 1, the control module 23 may blink the LED of the view point induction display module 22, or alternatively, may operate the illumination display module 36 described in FIG. 6. In this manner, in the case where there is a pedestrian M who moves to the door 3 or gateway unit 5, there is a high possibility that the pedestrian M enters the walking area 1 in a state in which he or she orients a direction of the face identification display module 21. In addition, there is a high possibility that a frontal image of the pedestrian M can be picked up immediately after the pedestrian M has entered the walking area 1.

In the meantime, in the case where, as a result of the check in step 2, it is determined that a person targeted for identification (pedestrian M) exists in the image pickup area 4 (step 2: YES), the control module 23 checks whether or not the pedestrian M exists between the position C and the position B of the walking area 1 (step 5).

In the case where, as a result of the check in step S5, a person targeted for identification, namely, a pedestrian M exists between the position C and the position B (step 5: YES), the control module 23 displays a whole image as shown in FIG. 5A via the face identification display module 21. At this time, the control module 23 also displays a frame 42 indicating a detected face region on the same screen at the same time (step 6).

Further, at this time, the control module 23 operates the LED of the view point induction display module 22 to blink (step 7) and/or operates the illumination display module 36, and prompts the pedestrian M to pay attention to orient to the direction of the face identification display module 21. Namely, in accordance with the processing operations in step 6 and step 7, the pedestrian M orients his or her line of sight to the face identification display module 21 without walking with his or her face down.

On the other hand, in the case where, as a result of the check in step 5, it is determined that a pedestrian M does not exist between the position C and the position B (step 5: NO), the control module 23 checks whether or not the pedestrian M exists between the position B and the position A of the walking area 1 (step 8).

In the case where, as a result of the check in step 8, the pedestrian M exists between the position B and the position A (step 8: YES), the control module 23 displays an image obtained by enlarging a face of the pedestrian M via the face identification display module 21, as shown in FIG. 5B (step 9).

At this time, the control module 23 turns off the LED of the view point induction display module 22 (step 10) so that the line of sight of the pedestrian M is not oriented to the view point induction display module 22. Namely, in the case where the pedestrian M approaches the cameras 11 and 12, the view point induction display module 22 is turned off so as not to pay attention to the view point induction display module 22 allocated at the periphery of the face identification display module 21, i.e., so as not to change a face angle of the pedestrian M facing the camera 11.

At this time, in the case where the illumination display module 36 allocated at the periphery of the liquid crystal display module 31 is operated, the operation of the illumination display module 36 may not always be stopped. Namely, in a state in which the pedestrian M pays attention to the illumination display module 36, there is a high possibility that the face of the pedestrian M is oriented to the direction of the face identification display module 21 (i.e., camera 11). Thus, there is a low possibility that the face angle of the pedestrian M changes.

Further, in the case where, as a result of the check in step 8, it is determined that the pedestrian M does not exist between the position B and the position A (step 8: NO), the control module 23 checks whether or not the pedestrian M exists between the position A of the walking area 1 and the door 3 (step 11).

In the case where, as a result of the check, in step 11, it is determined that the pedestrian M does not exist between the position A of the walking area 1 and the door 3 (step 11: NO), the control module 23 displays via the face identification display module 21 an image picked up via the camera 11 (step 12).

On the other hand, as a result of the check in step 11, in the case where it is determined that the pedestrian M exists between the position A of the walking area 1 and the door 3 (step 11: YES), the control module 23 checks whether or not the number of detected face images of the pedestrian M (targeted for identification) is equal to or greater than a predetermined number (step 13). The predetermined number of images used here denotes a required minimum number of images for face identification of the pedestrian M, and can be arbitrarily set according to a length of the walking area 1, i.e., an image pickup time of the pedestrian M.

In the case where, as a result of the check in step 13, it is determined that a predetermined number or more of face images targeted for identification have not been successfully acquired (step 13: NO), the control module 23 displays for a predetermined period of time, a message "identification NG" which indicates that identification has failed, as shown in FIG. 5E, via the face identification display module 21 (step 14).

On the other hand, in the case where, as a result of the check in step 13, it is determined that a predetermined number or more of face images targeted for identification have been successfully acquired (step 13: YES), the control module 23 sends to the face authenticating module 19 an image (face image) of a face region selected by the identification target selector module 15, and starts a face authenticating processing operation (FIG. 12 and step 15). At this time, the control module 23 displays a message screen indicating that "identification is in progress" as shown in FIG. 5C via the face identification display module 21, and waits until the face authenticating processing operation in the face authenticating module 19 has terminated (step 17).

When the face authenticating processing operation terminates (step 17: YES), the control module 23 checks whether or not identification has succeeded (step 18). In the case where it is determined that identification has succeeded (step 18: YES), a message "Identification OK, you may pass through gate" as shown in FIG. 5D is displayed via the face identification display module 21 (step 19). At the same time, the control module 23 turns ON for a predetermined period of time a passing enable signal to be transmitted to the gate control module 20 (step 20). In this way, the pedestrian M can pass through the door 3 or gateway unit 5.

On the other hand, in the case where, as a result of the check in step 18, it is determined that identification has failed (step 18: NO), the control module 23 displays for a predetermined period of time a message "identification NG" as shown in FIG. 5E via the face authenticating display module 21 (step S21).

Then, the control module 23 displays the detected face image, as shown in FIG. 5F, via the face identification display module 21. In addition, in the case where registration is made as a result of "identification NG", the control module 23 displays for a predetermined period of time a message which prompts the pedestrian M to input a key such as "Identification NG. Press any key when you want to make registration" (step 22). If no key input is made within a predetermined period of time (step 23: NO), the current processing reverts to step 1.

On the other hand, when a key is inputted via the operating module 16 within a predetermined period of time (step 23: YES), the control module 23 displays a message screen for prompting the pedestrian M to enter an ID number and a password, and waits for an operation input by the pedestrian M (step 24).

Then, when the ID number and the password have been inputted via the operating module 16 (step 24: YES), the control module 23 checks whether or not the inputted ID number and password are correct (step 25). In the case where it is determined that the inputted ID and password are correct (step 25: YES), a processing operation for registering dictionary information described later (or updating processing operation) is carried out (step 26).

At this time, by making the user carry a wireless card including pedestrian ID information instead of making the user input the ID number or password, ID may be read from the wireless card.

Alternatively, at this time, the control module 23 may permit only passing of the pedestrian M without accepting the dictionary information registering processing operation (or updating processing operation) after checking the ID number and password. For example, in the case where a comparatively large number of users utilize the area 2 and there is no time for accepting registering and updating processing operations, such a processing operation is effective, and a processing mode may be changed as required.

In any case, after checking the ID number and password, the control module 23 turns on for a predetermined period of time a passing enable signal with respect to the gate control module 20 (step 27), and permits the passing of the pedestrian M.

In the meantime, as a result of the check in step 4, in the case where any key is pressed and in the case where the current processing reverts to step 26, the control module 23 carries out a processing operation for registering dictionary information with respect to the pedestrian M (step 28).

Now, a processing operation for registering dictionary information in step 28 will be described with reference to a flowchart shown in FIG. 13.

In the registering processing operation in step 28, the control module 23 first accepts inputs of an ID number and a password (step 31). However, in the case where the current processing reverts to step 26 described above, this processing operation in step 31 is skipped. Next, the control module 23 checks whether or not the input ID number and password are correct (step 32), and terminates the registering processing operation if they are not correct.

When the user ID and password are correct as a result of the check in step 32, the control module 23 picks up a face of the pedestrian M as an image by the short distance camera 18 in accordance with an image pickup condition for the face correlating device or the like, and acquires a face image (step 33). Alternatively, at this time point, in the case where the face image of the pedestrian M has been successfully acquired, this face image may be utilized.

Then, the control module 23 extracts specific characteristic information from the obtained face image, and stores (registers or updates) the extracted characteristic information as dictionary information in the face recognition dictionary 17 (step 34).

The above-described image pickup condition may include that strong light irradiates from one side at the periphery of the face identification apparatus. In this case, for example, an illumination light provided at the face identification display module 21 is brightened only on one side, a similar state is reproduced in a simulative manner.

As has been described above, according to the above embodiment, in the case where the pedestrian M exists in a predetermined distance range (image pickup region 4) from the door 3 (gateway unit 5), the cameras 11 and 12 and the face identification display module 21 are allocated so as to be arranged on a straight line viewed from the pedestrian M, and is designed to capture a face image. Thus, the pedestrian M watches the face identification display module 21, whereby a face image can be stably picked up from the frontal face of the pedestrian M. Consequently, identification performance is remarkably improved.

In the above embodiment, in the case where the pedestrian M is comparatively distant from the door 3, a whole image is displayed, and a face region of the pedestrian M at this time is displayed on the face identification display module 21 while the face region is enclosed in a frame 42. When the pedestrian M approaches the door 3 in a predetermined distance, the face image is displayed in an enlarged manner. Thus, the pedestrian M can easily check whether or not he or she is targeted for identification. In this manner, the pedestrian M is recognizant of facing the camera 11.

In addition, according to the above embodiment, the face identification display module 21 for displaying a face image of the pedestrian M is placed in the vicinity of the door 3 and the view point induction display module 22 is placed in front of the pedestrian M (i.e., at the door 3) or the illumination display module 36 is operated with a proper timing so as to prompt the pedestrian M to effectively view the face identification display module 21. Thus, the pedestrian M easily perceives the face identification display module 21 so as to view the face identification display module 21 with stopping facing down.

Namely, in the embodiment, a frontal face image of the pedestrian M is easily picked up by the camera 11 and a time for picking up the face of the pedestrian M as an image can be comparatively extended, so that a required number of frontal images effective for identification can be acquired. Further, when the pedestrian M approaches the door 3 to a predetermined extent, the frontal view point induction display module 22 is turned OFF. Consequently, the pedestrian M pays attention to only the face identification display module 21 for displaying a face, thereby making it possible to stably capture a frontal face image of the pedestrian M. Therefore, identification performance is remarkably improved.

Moreover, in the above embodiment, two cameras 11 and 12 are intensively allocated at the upper and lower portions without being spaced from each other so as to calculate a distance from a viewing difference between the two cameras 11 and 12 to the pedestrian M and to make an identification process and a display control according to the calculated distance. At the same time, a face image closer to a frontal face of the pedestrian M with his or her face down is picked up by using the lower camera 12. In this manner, the control module 23 can recognize a distance from each of the cameras 11 and 12 to the pedestrian M, and make control according to a distance from the door 3 to the pedestrian M. Namely, according to the embodiment, a user interface is improved.

Furthermore, according to the embodiment, face identification is carried out by using the face image obtained until the pedestrian M has approached the cameras 11 and 12. When face identification has failed, the operating module 16 installed in the vicinity of the door 3 is operated by using the obtained image, thereby making it possible to register or update dictionary information. In this manner, a face image obtained at the time of walking can be efficiently utilized for registration even in the case where identification has failed.

## Claims

1. A face identification apparatus for, by the time a moving person reaches a specific position, identifying a face of the person, the apparatus comprising:
a camera (11, 12) which captures images including at least a face of the moving person (M);
a face detector module (13) which detects face regions of the person from the images captured by the camera;
a face identification module (19) which compares an image of the face region detected by the face detector module with dictionary entries which has been registered in advance, thereby determining whether or not the person has been registered in advance; and
a face identification display module (21) installed in the vicinity of the camera, the display module displaying a current state of face identification with respect to the moving person, **characterized in that** the camera (11, 12) captures the frontal face images of the person (M) moving to the specific position while the person is viewing the face identification display module (21).

2. A face identification apparatus according to claim 1, **characterized by** further comprising: a face distance measuring module (14) which calculates a distance of the moving person (M) from the specific position (2), wherein
the face identification display module (21) changes a display image based on a result of the face distance measuring module (14).

3. A face identification apparatus according to claim 2, **characterized in that** the face identification display module (21) displays the image captured by the camera (12) with face region bound by a rectangle, in the case where the distance of the moving person from the specific position (2) is greater than a predetermined value, and displays the zoomed face region of the person in the case where the moving person approaches the specific position and the distance of the person from specific position (2) becomes smaller than another smaller predetermined value.

4. A face identification apparatus according to claim 1, **characterized by** further comprising: a view point induction display module (22) which prompts the moving person to view the face identification display module (21).

5. A face identification apparatus according to claim 4, **characterized in that** the view point induction display module (22) includes an illumination display module (36) allocated in a frame shape at the periphery of the face identification display module (21).

6. A face identification apparatus according to claim 4, **characterized in that** the view point induction display module (22) operates even when a person (M) moving to the specific position (2) does not exist.

7. A face identification apparatus according to claim 4, **characterized by** further comprising: a face distance measuring module (14) which calculates a distance of the moving person (M) from the specific position (2), wherein
the view point induction display module (22) operates based on a result of the face distance measuring module.

8. A face identification apparatus according to claim 7, **characterized in that** the view point induction display module (22) gets activated in the case where the distance of the moving person (M) from the specific position is greater than a predetermined value, and gets deactivated in the case where the moving person (M) approaches the specific position (2) and the distance of the person from the specific position (2) becomes smaller than another smaller predetermined value.

9. A face identification apparatus according to claim 1, **characterized in that**
the camera (11, 12) has at least an upper camera (11) installed so that the face of the moving person (M) is captured as an image, and a lower camera (12) installed beneath the upper camera, and
the face detector module (13) detects the face region of the person from each of the images captured by the upper and lower cameras.

10. A face identification apparatus according to claim 9, **characterized by** further comprising:
a face distance measuring module (14) which calculates the distance of the person (M) from the camera (11, 12) based on each of the images captured by the upper and lower cameras (11, 12); and
an identification target selector module (15) which selects an optimal face region targeted for identification based on a result of the detection in the face detector module (13) and a result of the face distance measuring module (14), wherein
the face identification module (19) compares an image of the face region selected by the identification target selector module (15) with dictionary entries which have been registered in advance, thereby determining whether or not the person has been registered in advance.

11. A face identification apparatus according to claim 1, **characterized by** further comprising: an operation module (16) which, in the case where by the face identification module (19), it is determined that the person (M) has not been registered in advance, accepts an operation input for registering the person to the dictionary or updating the dictionary by using an image captured at the time of the face identification.

12. A face identification apparatus according to claim 11, **characterized by** further comprising: a short distance camera (18) which captures a face of a person (M) who operates the operation module (16) as an image.

13. A face identification apparatus according to claim 11, **characterized in that** the image captured at the time of the identification is an image of the face region detected by the face detector module while the person moves.

14. A face identification apparatus for, by the time a moving person (M) reaches a specific position (2), identifying a face of the person, the apparatus **characterized by** comprising:
a camera (11, 12) which capture an image including at least a face of the moving person;
a face detector module (13) which detects a face region of the person from the image captured by the camera;
a face identification module (19) which compares an image of the face region detected by the face detector module with dictionary entries which have been registered in advance, thereby determining whether or not the person is a person which has been registered in advance;
a face identification display module (21) installed in the vicinity of the camera, the display module displaying a current state of face identification with respect to the moving person; and
a face distance measuring module (14) which calculates a distance of the moving person from the specific position, wherein
the camera (11, 12) is installed at a position at which the face of the person (M) moving to the specific position (2) is captured as an image from a frontal face while the person is viewing the face identification display module (21), and
the face identification display module (21) changes a display image based on a result of the face distance measuring module (14).

15. A face identification apparatus according to claim 14, **characterized in that** the face identification display module (21) displays the image captured by the camera (11, 12) with face region bound by a rectangle, in the case where the distance of the moving person (M) from the specific position (2) is greater than a predetermined value, and displays a zoomed face region of the person in the case where the moving person approaches the specific position (2) and the distance of the person from specific position becomes smaller than another smaller predetermined value.

16. A face identification apparatus according to claim 14, **characterized by** further comprising: a view point induction display module (22) which prompts the moving person to view the face identification display module (21).

17. A face identification apparatus according to claim 16, **characterized in that** the view point induction display module (22) includes an illumination display module (36) allocated in a frame shape at the periphery of the face identification display module (21).

18. A face identification apparatus according to claim 16, **characterized in that** the view point induction display module (22) is activated even when a person (M) moving to the specific position (2) does not exist.

19. A face identification apparatus according to claim 16, **characterized in that** the view point induction display module (22) operates based on a result of the face distance measuring module (14).

20. A face identification apparatus according to claim 19, **characterized in that** the view point induction display module (22) operates in the case where the moving person (M) is distant from the specific position (2) by a predetermined distance or more, and stops operation in the case where the moving person (M) approaches the specific position (2) in excess of the predetermined distance.

21. An entrance and exit management apparatus for, until a moving person (M) reaches an entrance and exit gate (3, 5) provided in an entrance and exit target area (2), identifying a face of the person (M), and controlling the entrance and exit gate (3, 5) to be opened or closed based on a result of the face identification, the management apparatus **characterized by** comprising:
a camera (11, 12) which captures an image including at least a face of the moving person (M);
a face detector module (13) which detects a face region of the person from the image captured by the camera;
a face identification module (19) which compares an image on the face region detected by the face detector module (13) with dictionary entries which have been registered in advance, thereby determining whether or not the person has been registered in advance;
a face identification display module (21) provided in the vicinity of the camera, the display module (21) displaying a current state of face identification with respect to the moving person (M); and
gate control means (20) for controlling the entrance and exit gate (3, 5) to be opened or closed based on a result of the face identification module (19),
wherein the camera (11, 12) is installed at so that the face of the person moving to the entrance and exit gate (3, 5) is captured as an image from a frontal face while the person is viewing the face identification display module (21).

22. An entrance and exit management apparatus according to claim 21, **characterized by** further comprising: a face distance measuring module (14) which calculates a distance of the moving person (M) from the entrance and exit gate (3, 5), wherein
the face identification display modules (21) changes a display image based on a result of the face distance measuring module (14).

23. An entrance and exit management apparatus according to claim 22, **characterized in that** the face identification display module (21) displays the image captured by the camera (11, 12) with face region bound by a rectangle, in the case where the distance of the moving person (M) from the entrance and exit gate is greater than a predetermined value, and displays the zoomed face region of the person in the case where the moving person (M) approaches the specific position (2) and the distance of the person from specific position becomes smaller than another smaller predetermined value and exit gate (3, 5).

24. An entrance and exit management apparatus according to claim 21, **characterized by** further comprising: a view point induction display module which prompts the moving person (M) to view the face identification display module (21).

25. An entrance and exit management apparatus according to claim 24, **characterized in that** the view point induction display module (22) includes an illumination display module (36) allocated in a frame shape at the periphery of the face identification display module (21).

26. An entrance and exit management apparatus according to claim 24, **characterized in that** the view point induction display module (22) operates even when a person (M) moving to the entrance and exit gate (3, 5) does not exist.

27. An entrance and exit management apparatus according to claim 24, **characterized by** further comprising: a face distance measuring module (14) which calculates a distance of the moving person (M) from the entrance and exit gate (3, 5), wherein
the view point induction display module (22) operates based on a result of the face distance measuring module (14).

28. An entrance and exit management apparatus according to claim 27, **characterized in that** the view point induction display module (22) gets activated in the case where the distance of the moving person (M) from the entrance and exit gate (3, 5) is greater than a predetermined value, and gets deactivated in the case where the moving person (M) approaches the entrance and exit gate (3, 5) and the distance of the person from the specific position becomes smaller than another smaller predetermined value.

29. An entrance and exit management apparatus according to claim 27, **characterized in that**
the camera (11, 12) has at least an upper camera (11) installed at so that a face of the moving person (M) is captured as an image, and a lower camera (12) installed beneath the upper camera, and
the face detector module (13) detects the face regions of the person (M) from each of the images captured by the upper and lower cameras (11, 12), respectively.

30. An entrance and exit management apparatus according to claim 29, **characterized by** further comprising:
a face distance measuring module (14) which calculates a distance of the person (M) from the camera (11, 12) based on each of the images captured by the upper and lower cameras (11, 12); and
an identification target selector module (15) which selects an optimal face region targeted for identification based on a result of the detection in the face detector module (13) and a result of the face distance measuring module (14), wherein
the face identification module (19) compares the image on the face region selected by the identification target selector module (15) with dictionary entries which have been registered in advance, thereby determining whether or not the person has been registered in advance.

31. An entrance and exit management apparatus according to claim 21, **characterized by** further comprising: an operation module (16) which, in the case where, as a result of the identification by the face identification module (19), it is determined that the person (M) has not been registered in advance, accepts an operation input for registering the person to the dictionary or updating the dictionary by using an image obtained at the time of the identification.

32. An entrance and exit management apparatus according to claim 31, **characterized by** further comprising: a short distance camera (18) which captures a face of a person (M) who operates the operation module (16) as an image.

33. An entrance and exit management apparatus according to claim 31, **characterized in that** the image obtained at the time of the identification is an image on the face region detected by the face detector module (13) while the person (M) moves.
